# EUROPEAN PATENT APPLICATION

(11) **EP 4 772 264 A1**
(43) Date of publication of application: **08.07.2026**
(21) Application number: 24859145.5
(22) Date of filing: 01.07.2024
(51) Int. Cl.: B01D 53/14, B01D 53/047, B01D 53/62, B01D 53/78, B01D 53/81

(54) **CARBON DIOXIDE ABSORBENT, METHOD FOR RECOVERING CARBON DIOXIDE, AND APPARATUS FOR SEPARATING AND RECOVERING CARBON DIOXIDE**

(30) Priority: 30.08.2023 JP 2023139860
(71) Applicant: MITSUBISHI GAS CHEMICAL COMPANY, INC., Chiyoda-ku Tokyo 100-8324 (JP)
(72) Inventor: KAWASHIMA Yuki, Hiratsuka-shi, Kanagawa 254-0016 (JP); KOUNO Kazuki, Hiratsuka-shi, Kanagawa 254-0016 (JP)
(74) Representative: Hoffmann Eitle
(86) International application number: PCT/JP2024/023789
(87) International publication number: WO 2025/047100

(57) **Abstract**

Provided are a carbon dioxide absorbent comprising an amine compound (A) represented by the following general formula (1), a method for capturing carbon dioxide using the carbon dioxide absorbent, and a carbon dioxide separation and capture apparatus: H₂N-(CH₂)ₘ-X-(CH₂)ₙ-NHR¹ (1) wherein X is a phenylene group or a cyclohexylene group, R¹ is a hydrocarbon group having 2 to 12 carbon atoms and optionally having a hydroxy group, and m and n are each independently a number of 1 to 6.

## Description

### Technical Field

The present invention relates to a carbon dioxide absorbent, a method for capturing carbon dioxide and a carbon dioxide separation and capture apparatus.

### Background Art

From a viewpoint of global warming issues, there is a need to reduce carbon dioxide.

One of methods for reducing carbon dioxide is a technology of efficiently capturing a high concentration (about 10 to 30% by volume) of carbon dioxide from exhaust gas discharged from thermal power plants and the like, and burying and storing it in the ground or in the sea (CCS: carbon dioxide capture and storage).

By contrast, a technology of directly capturing a low concentration of carbon dioxide (about 0.04% by volume) from the air (DAC: direct air capture) has received attention in recent years. Carbon dioxide absorbents for use in DAC are required to have higher carbon dioxide absorption capacity than that of carbon dioxide absorbents for use in CCS.

Technologies related to DAC have been variously studied. For example, Patent Literature 1 discloses an absorbent for absorbing carbon dioxide from the air, containing alkylamine substituted with a hydroxy group or an optionally substituted amino group.

Patent Literature 2 discloses a carbon dioxide absorbent containing a predetermined amount or more of a polyamine compound having an alicyclic hydrocarbon structure.

Patent Literature 3 discloses a carbon dioxide absorbent containing a predetermined amount or more of an amine compound having a predetermined heterocyclic structure.

Patent Literature 4 discloses a carbon dioxide absorbent containing a specific cyclic amine compound and a porous material.

Methods for absorbing and desorbing carbon dioxide for carbon dioxide absorbents include thermal swing and pressure swing. The thermal swing is a method of performing the absorption and desorption of carbon dioxide by changing a temperature, and involves absorbing carbon dioxide under a low-temperature (non-heating) condition and desorbing carbon dioxide under a high-temperature (heating) condition. The pressure swing is a method of performing the absorption and desorption of carbon dioxide by changing a pressure, and involves absorbing carbon dioxide under a high-pressure (increased pressure or atmospheric pressure) condition and desorbing carbon dioxide under a low- pressure (reduced pressure) condition.

Among them, the absorption and desorption of carbon dioxide by the pressure swing predominate in terms of energy because the step of heating a carbon dioxide absorbent containing an amine compound as disclosed in Patent Literatures 1 to 4 is not essential. Furthermore, reduction in the repeated usability of the carbon dioxide absorbent can also be suppressed because the deterioration of the amine compound by heating is unlikely to occur.

As for use of the pressure swing in the DAC technologies, for example, Patent Literature 5 discloses a process for removing CO₂ from air, the process comprising steps of: passing the air in contact with a first CO₂ adsorbent to absorb CO₂ from the air; passing the CO₂ adsorbent in contact with an ion exchange resin to absorb CO₂ from the first CO₂ adsorbent; bringing the ion exchange resin in contact with a second CO₂ adsorbent to absorb CO₂ from the ion exchange resin; and recovering the second CO₂ adsorbent via thermal swing or pressure swing, or electrolytically.

### Citation List

### Patent Literature

Patent Literature 1: JP 2017-031046 A
Patent Literature 2: WO 2022/138302 A
Patent Literature 3: WO 2022/163209 A
Patent Literature 4: WO 2023/013397 A
Patent Literature 5: JP 2009-502483 A

### Summary of Invention

### Technical Problem

The method for capturing carbon dioxide as described in Patent Literature 5 needs to use first and second adsorbents and thus involves complicated steps.

The carbon dioxide absorbents containing an amine compound as disclosed in Patent Literatures 1 to 4 are still susceptible to improvement in carbon dioxide desorption performance in the case of using pressure swing after absorption of carbon dioxide, though having a good carbon dioxide absorption property. Insufficient carbon dioxide desorption performance might gradually reduce the carbon dioxide absorption property when the absorption and desorption of carbon dioxide are repeated using a carbon dioxide absorbent.

An object of the present invention is to provide a carbon dioxide absorbent that is excellent in carbon dioxide absorption property and is excellent in repeated usability with little or no reduction in carbon dioxide absorption property even if the carbon dioxide absorbent is regenerated by desorbing carbon dioxide by pressure swing after absorption of carbon dioxide.

### Solution to Problem

The present inventors have found that a carbon dioxide absorbent containing a specific amine compound can attain the above object.

That is, the present invention relates to the following.
[1] A carbon dioxide absorbent comprising an amine compound (A) represented by the following general formula (1):

   H₂N-(CH₂)ₘ-X-(CH₂)ₙ-NHR¹ (1)

   wherein X is a phenylene group or a cyclohexylene group, R¹ is a hydrocarbon group having 2 to 12 carbon atoms and optionally having a hydroxy group, and m and n are each independently a number of 1 to 6.
[2] The carbon dioxide absorbent according to [1], wherein the amine compound (A) is a compound that is liquid at 25°C.
[3] The carbon dioxide absorbent according to [1] or [2], wherein X in the general formula (1) is a 1,3-phenylene group or a 1,3-cyclohexylene group.
[4] The carbon dioxide absorbent according to any one of [1] to [3], wherein the amine compound (A) is an amine compound represented by any of the following formulas (1-1) to (1-6): 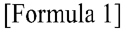 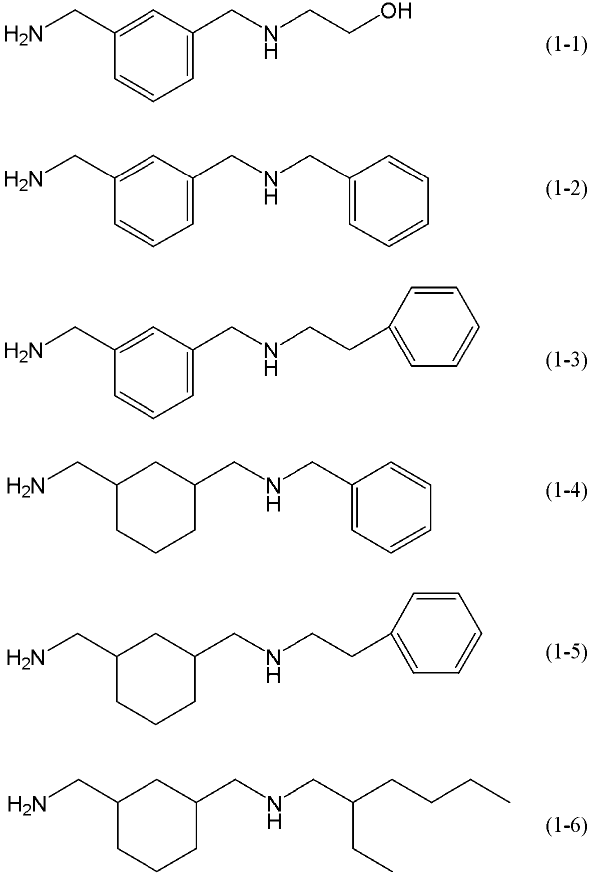
[5] The carbon dioxide absorbent according to any one of [1] to [4], wherein the carbon dioxide absorbent further comprises a porous material (B).
[6] The carbon dioxide absorbent according to [5], wherein the porous material (B) comprises at least one selected from the group consisting of silica and alumina.
[7] A method for capturing carbon dioxide, comprising using the carbon dioxide absorbent according to any one of [1] to [6].
[8] The method according to [7], wherein the method comprises: an absorption step of bringing a gas containing carbon dioxide into contact with the carbon dioxide absorbent, to cause the carbon dioxide absorbent to absorb the carbon dioxide, and a desorption step of desorbing carbon dioxide from the carbon dioxide absorbent with carbon dioxide absorbed in the absorption step, and wherein the desorption step comprises a step of subjecting the carbon dioxide absorbent with carbon dioxide absorbed to a reduced pressure condition.
[9] A carbon dioxide separation and capture apparatus comprising:
   an absorption apparatus comprising a mechanism for bringing a gas containing carbon dioxide into contact with the carbon dioxide absorbent according to any one of [1] to [6], to cause the carbon dioxide absorbent to absorb the carbon dioxide; and
   a desorption apparatus comprising a mechanism for desorbing carbon dioxide from the carbon dioxide absorbent with carbon dioxide absorbed.

### Advantageous Effects of Invention

The present invention can provide a carbon dioxide absorbent that is excellent in carbon dioxide absorption property and is excellent in repeated usability with little or no reduction in carbon dioxide absorption property even if the carbon dioxide absorbent is regenerated by desorbing carbon dioxide by pressure swing after absorption of carbon dioxide.

### Brief Description of Drawing

[Fig. 1] Fig. 1 is a schematic diagram showing an embodiment of a carbon dioxide separation and capture apparatus of the present invention.
[Fig. 2] Fig. 2 is a ¹H-NMR chart of an amine compound obtained in Production Example 1.
[Fig. 3] Fig. 3 is a ¹H-NMR chart of an amine compound obtained in Production Example 2.
[Fig. 4] Fig. 4 is a ¹H-NMR chart of an amine compound obtained in Production Example 4.

### Description of Embodiments

### [Definition]

Embodiments of the present invention (hereinafter, also simply referred to as "the present embodiments") will be described in detail. The following embodiments are examples to explain the present invention and do not limit the contents of the present invention. The present invention can be implemented with appropriate modifications within the scope of the invention. In the present embodiments, it is considered that provisions that are preferred can be adopted arbitrarily, and combinations of preferred ones are more preferred. In the present embodiments, description of "XX to YY" means "XX or more and YY or less".

In the present specification, "good carbon dioxide absorption property" means that a carbon dioxide absorbent has a high carbon dioxide absorption capacity. Furthermore, "good carbon dioxide absorption property from the air" means that a carbon dioxide absorbent has a high absorption capacity of a low concentration carbon dioxide (about 0.04% by volume) present in the air.

In the present specification, "excellent repeated usability even if the carbon dioxide absorbent is regenerated by desorbing carbon dioxide by pressure swing" means that the carbon dioxide absorbent exhibits a high carbon dioxide absorption capacity and a stable carbon dioxide absorption property even after repeated cycles of absorption of carbon dioxide - desorption of carbon dioxide under a reduced pressure condition.

Specifically, the carbon dioxide absorption property and the repeated usability can be evaluated by methods described in Examples.

### [Carbon Dioxide Absorbent]

A carbon dioxide absorbent of the present invention comprises an amine compound (A) represented by the following general formula (1) (hereinafter, also simply referred to as "amine compound (A)"):

H₂N-(CH₂)ₘ-X-(CH₂)ₙ-NHR¹ (1)

In the formula (1), X is a phenylene group or a cyclohexylene group, R¹ is a hydrocarbon group having 2 to 12 carbon atoms and optionally having a hydroxy group, and m and n are each independently a number of 1 to 6.

The carbon dioxide absorbent of the present invention, by having the above configuration, is excellent in carbon dioxide absorption property and is excellent in repeated usability with little or no reduction in carbon dioxide absorption property even if the carbon dioxide absorbent is regenerated by desorbing carbon dioxide by pressure swing after absorption of carbon dioxide.

The carbon dioxide absorbent of the present invention exhibits a good absorption property for carbon dioxide from the air having a carbon dioxide concentration as low as about 0.04% by volume. Accordingly, the carbon dioxide absorbent of the present invention can be suitably used in technology of directly absorbing carbon dioxide (DAC) from the air.

The carbon dioxide absorbent of the present invention can be also suitably used in case of capturing carbon dioxide from a gas having a carbon dioxide concentration as low as, e.g., 0.01% by volume or more and 1% by volume or less.

The reason why the carbon dioxide absorbent of the present invention exerts the above effects is not certain, but is considered to be as follows.

The amine compound (A) contained in the carbon dioxide absorbent has a cyclic structure having a primary amino group bonded to the cyclic structure via a (poly)methylene group, and the amino group easily forms carbonate through reaction with carbon dioxide and are expected to exert an excellent carbon dioxide absorption property.

Here, an amine compound having a primary amino group bonded directly to the cyclic structure reduces the carbon dioxide absorption property because carbonate is difficult to form through reaction with carbon dioxide.

An amine compound having two or more primary amino groups reduces desorption performance when carbon dioxide is desorbed by pressure swing after carbon dioxide absorption, though the carbon dioxide absorption property is excellent. This reduces the carbon dioxide absorption property of the carbon dioxide absorbent after regeneration by pressure swing. By contrast, the amine compound (A) used in the present invention has only one primary amino group and is therefore expected to provide excellent carbon dioxide desorption performance by pressure swing and improve repeated usability. When a hydrocarbon group (R¹ in the general formula (1)) bonded to a secondary amino group in the amine compound (A) has a bulky structure, the carbon dioxide desorption performance is expected to be further improved.

In the present specification, "primary amino group" means an amino group having two hydrogen atoms on a nitrogen atom, i.e., -NH₂ group. "Secondary amino group" means an amino group having one hydrogen atom on a nitrogen atom.

### <Amine Compound (A)>

The amine compound (A) is an amine compound represented by the following general formula (1):

H₂N-(CH₂)ₘ-X-(CH₂)ₙ-NHR¹ (1)

In the formula (1), X is a phenylene group or a cyclohexylene group, R¹ is a hydrocarbon group having 2 to 12 carbon atoms and optionally having a hydroxy group, and m and n are each independently a number of 1 to 6.

The amine compound (A) may be a compound solid at 25°C or may be a compound that is liquid at 25°C, but is preferably a compound that is liquid at 25°C from the viewpoint of the supporting property of a porous material (B) described later and from the viewpoint of improving the carbon dioxide desorption performance.

The compound that is liquid at 25°C described herein means a compound having a melting point of lower than 25°C.

In the general formula (1), X is a phenylene group or a cyclohexylene group and is preferably a 1,3-phenylene group, a 1,4-phenylene group, a 1,3-cyclohexylene group, or a 1,4-cyclohexylene group, more preferably the 1,3-phenylene group or the 1,3-cyclohexylene group, and even more preferably the 1,3-phenylene group, from the viewpoint of improving the carbon dioxide absorption property and from the viewpoint of improving the carbon dioxide desorption performance by pressure swing.

In the general formula (1), R¹ is a hydrocarbon group having 2 to 12 carbon atoms and optionally having a hydroxy group. Examples of the hydrocarbon include alkyl groups, alkenyl groups, aryl groups, and aralkyl groups. The hydrocarbon is preferably an alkyl group, an aryl group, or an aralkyl group, and more preferably the alkyl group or the aralkyl group, from the viewpoint of improving the carbon dioxide desorption performance by pressure swing, from the viewpoint of improving the repeated usability, and from the viewpoint of the ease of production.

Examples of the alkyl group include linear alkyl groups, branched alkyl groups, and cycloalkyl groups. The alkyl group is preferably a linear alkyl group or a branched alkyl group, and more preferably the branched alkyl group, from the viewpoint of improving the carbon dioxide desorption performance by pressure swing and from the viewpoint of improving the repeated usability.

Examples of the linear alkyl group include linear alkyl groups having 2 to 12 carbon atoms, preferably 2 to 8 carbon atoms, and more preferably 2 to 4 carbon atoms and include an ethyl group, a n-propyl group, and a n-butyl group.

Examples of the branched alkyl group include branched alkyl groups having 3 to 12 carbon atoms, and more preferably 3 to 8 carbon atoms and include an isopropyl group, an isobutyl group, a sec-butyl group, a tert-butyl group, an isopentyl group, a neopentyl group, an isohexyl group, an isoheptyl group, an isooctyl group, and an ethylhexyl group.

Examples of the aryl group include aryl groups having 6 to 12 carbon atoms and include a phenyl group, a toluyl group, a mesityl group, a biphenyl group, and a naphthyl group.

Examples of the aralkyl group include aralkyl groups having 7 to 12 carbon atoms and include a benzyl group and a phenethyl group.

Among those described above, R¹ is preferably an alkyl group having 2 to 12 carbon atoms or an aralkyl group having 7 to 12 carbon atoms, which may optionally have a hydroxyl group, more preferably a linear alkyl group having 2 to 4 carbon atoms, branched alkyl group having 3 to 8 carbon atoms, or an aralkyl group having 7 to 12 carbon atoms, which may optionally have a hydroxyl group, even more preferably a hydroxyethyl group, an ethylhexyl group, a benzyl group, or a phenethyl group, still more preferably the ethylhexyl group, the benzyl group, or the phenethyl group, and yet still more preferably the ethylhexyl group or the phenethyl group, from the viewpoint of improving the carbon dioxide desorption performance by pressure swing, from the viewpoint of improving the repeated usability, and from the viewpoint of the ease of production.

The amine compound (A) is an amine compound represented by any of the following formulas (1-1) to (1-6), more preferably an amine compound represented by any of the following formulas (1-2) to (1-6), even more preferably an amine compound represented by any of the following formulas (1-2) to (1-4), and still more preferably an amine compound represented by formula (1-3), from the viewpoint of the carbon dioxide absorption property, from the viewpoint of improving the carbon dioxide desorption performance by pressure swing, from the viewpoint of improving the repeated usability, and from the viewpoint of the ease of production.

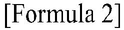

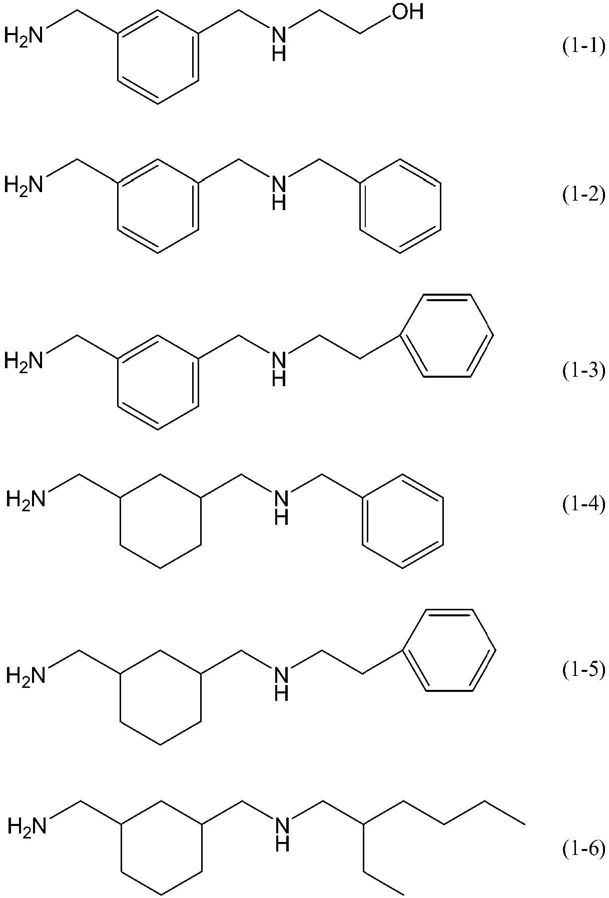

One of these amine compounds (A) can be used alone, or two or more thereof can be used in combination.

A preferable embodiment of a method for producing the amine compound (A) is as follows.

For example, the amine compound represented by the formula (1-1) can be produced by stirring metaxylylenediamine preferably under a heating condition of 60 to 150°C, and blowing ethylene oxide thereinto for reaction.

The amine compound represented by the formula (1-2), (1-4), or (1-6) can be produced by reacting metaxylylenediamine or 1,3-bis(aminomethyl)cyclohexane with an aldehyde compound preferably under a heating condition of 60 to 150°C to obtain imine, followed by the hydrogen reduction of the imine. In the production of the amine compound represented by the formula (1-2) or (1-4), benzaldehyde is used as the aldehyde compound. In the production of the amine compound represented by the formula (1-6), 2-ethylhexanal is used as the aldehyde compound.

The amine compound represented by the formula (1-3) or (1-5) can be produced in accordance with a method described in JP 2002-161076 A. Specifically, the amine compound can be produced by reacting metaxylylenediamine or 1,3-bis(aminomethyl)cyclohexane with styrene usually at 25 to 150°C in the presence of a basic catalyst such as lithium amide.

After the completion of the reaction, a more highly pure amine compound (A) can be obtained by further removing the catalyst, distilling off a reaction solvent, and/or performing distillation and purification.

A commercially available product may be used as the amine compound (A). Examples of the commercially available product of the amine compound represented by the formula (1-3) include "Gaskamine240" produced by Mitsubishi Gas Chemical Co., Inc.

A content of the amine compound (A) in all amine compounds in the carbon dioxide absorbent of the present invention is preferably 50% by mass or more, more preferably 60% by mass or more, even more preferably 70% by mass or more, still more preferably 80% by mass or more, yet more preferably 90% by mass or more, even much more preferably 95% by mass or more, and still much more preferably 98% by mass or more, and 100% by mass or less, from the viewpoint of the carbon dioxide absorption property, from the viewpoint of improving the carbon dioxide desorption performance by pressure swing, and from the viewpoint of improving the repeated usability.

The content of the amine compound (A) in the carbon dioxide absorbent of the present invention is preferably 10% by mass or more, more preferably 20% by mass or more, even more preferably 30% by mass or more, still more preferably 40% by mass or more, yet more preferably 45% by mass or more, and even much more preferably 50% by mass or more, and 100% by mass or less, from the viewpoint of improving the carbon dioxide absorption property.

### <Porous Material (B)>

The carbon dioxide absorbent of the present invention preferably further comprises a porous material (B), and more preferably, at least some of the amine compound (A) is supported on the porous material (B), from the viewpoint of further improving the carbon dioxide absorption property and from the viewpoint of improving the carbon dioxide desorption performance by pressure swing.

The porous material (B) is preferably one that can support the amine compound (A) and withstand conditions of desorbing carbon dioxide, and includes, for example, at least one selected from the group consisting of silica, alumina, silica-alumina, magnesia, zirconia, zeolite, a zeolite analogous compound, a clay mineral, a natural mineral, activated carbon, a carbon molecular sieve (porous carbon), porous resin (synthetic adsorbent), a metal organic framework, and a waste solid. Among these, the porous material (B) preferably comprises at least one selected from the group consisting of the silica and the alumina, more preferably comprises the silica, and even more preferably comprises mesoporous silica, from the viewpoint of further improving the carbon dioxide absorption property and from the viewpoint of improving the carbon dioxide desorption performance by pressure swing.

A content of the silica or the alumina, preferably the silica, and more preferably the mesoporous silica, in the porous material (B) is preferably 50% by mass or more, more preferably 60% by mass or more, even more preferably 70% by mass or more, still more preferably 80% by mass or more, yet more preferably 90% by mass or more, even much more preferably 95% by mass or more, and still much more preferably 98% by mass or more, and 100% by mass or less, from the viewpoint of further improving the carbon dioxide absorption property and from the viewpoint of improving the carbon dioxide desorption performance by pressure swing.

A shape of the porous material (B) is preferably in a particulate form from the viewpoint of increasing an amount of the amine compound (A) supported, thereby further improving the carbon dioxide absorption property.

When the porous material (B) is in a particulate form, a volume median particle size (D₅₀) of the porous material (B) measured by laser diffraction/scattering particle size distribution measurement is preferably 1 µm or more, more preferably 5 µm or more, and even more preferably 10 µm or more, from a viewpoint of improving handling, and preferably 500 µm or less, more preferably 300 µm or less, even more preferably 200 µm or less, still more preferably 180 µm or less, and yet more preferably 160 µm or less, from a viewpoint of improving the amount of the amine compound (A) supported.

The specific surface area of the porous material (B) measured by a BET method is preferably 2 m²/g or more, more preferably 10 m²/g or more, even more preferably 100 m²/g or more, still more preferably 200 m²/g or more, yet more preferably 400 m²/g or more, and even much more preferably 600 m²/g or more, from the viewpoint of improving the amount of the amine compound (A) supported, and preferably 3,000 m²/g or less, more preferably 1,500 m²/g or less, even more preferably 1,200 m²/g or less, and still more preferably 1,000 m²/g or less, from the viewpoint of improving the handling.

The pore volume of the porous material (B) is preferably 0.1 cm³/g or more, more preferably 0.3 cm³/g or more, and even more preferably 0.5 cm³/g or more, from the viewpoint of improving the amount of the amine compound (A) supported, and preferably 5.0 cm³/g or less, more preferably 3.0 cm³/g or less, even more preferably 2.5 cm³/g or less, still more preferably 2.0 cm³/g or less, yet more preferably 1.5 cm³/g or less, and even much more preferably 1.0 cm³/g or less, from the viewpoint of improving the repeated usability.

The specific surface area and the pore volume can be measured, for example, by a specific surface area/pore size distribution measurement analyzer (e.g., "ASAP2020" produced by Shimadzu Corporation) using a constant volume method. As a more specific gas adsorption measurement method using the specific surface area/pore size distribution measurement analyzer, for example, a sample is pretreated by heating and vacuum evacuation, and 0.1 g of the sample for measurement is placed in a sample tube. The sample is then heated to 40°C, vacuum evacuated for 6 hours, cooled to room temperature, and mass of the sample is measured. In the measurement, a liquid nitrogen temperature is set and a pressure range is specified, and the specific surface area, the pore volume, and the pore size can be analyzed and calculated from the obtained nitrogen adsorption isotherms.

The porous material (B) may be granulation molded from the particulate porous material by a known method to make pellets, tablets, or other granulated products. The granulation molding method includes, for example, a dry granulation method using a compression molding machine and a wet granulation method using a binder. By using the particulate porous material granulation molded, vibration resistance and abrasion resistance can be imparted, thereby improving physical stability.

When the carbon dioxide absorbent comprises the amine compound (A) and the porous material (B), a content of the amine compound (A) in the carbon dioxide absorbent is preferably 10 parts by mass or more, more preferably 20 parts by mass or more, even more preferably 30 parts by mass or more, still more preferably 40 parts by mass or more, yet more preferably 50 parts by mass or more, even much more preferably 70 parts by mass or more, and still much more preferably 80 parts by mass or more, and preferably 1000 parts by mass or less, more preferably 500 parts by mass or less, even more preferably 250 parts by mass or less, still more preferably 200 parts by mass or less, yet more preferably 150 parts by mass or less, and even much more preferably 120 parts by mass or less, with respect to 100 parts by mass of the porous material (B), from the viewpoint of the carbon dioxide absorption property, from the viewpoint of improving the carbon dioxide desorption performance by pressure swing, and from the viewpoint of improving the repeated usability.

When the carbon dioxide absorbent comprises the amine compound (A) and the porous material (B), a total content of the amine compound (A) and the porous material (B) in the carbon dioxide absorbent is preferably 60% by mass or more, more preferably 70% by mass or more, even more preferably 80% by mass or more, still more preferably 90% by mass or more, yet more preferably 95% by mass or more, and even much more preferably 98% by mass or more, and 100% by mass or less, when the total amount of the carbon dioxide absorbent is 100% by mass from the viewpoint of the carbon dioxide absorption property, from the viewpoint of improving the carbon dioxide desorption performance by pressure swing, and from the viewpoint of improving the repeated usability.

### <Other Components>

The carbon dioxide absorbent may include components other than the amine compound (A), and the porous material (B) as appropriate to the extent that the effects of the invention are not impaired. The components other than the amine compound (A) and the porous material (B) include, for example, a deterioration inhibitor, an antifoaming agent, an antioxidant, and a desiccant to remove moisture (magnesium sulfate, molecular sieves, etc.).

A content of water in the carbon dioxide absorbent is, from the viewpoint of improving the carbon dioxide absorption property and the repeated usability, preferably 10% by mass or less, more preferably 5% by mass or less, even more preferably 1% by mass or less, still more preferably 0.5% by mass or less, yet more preferably 0.1% by mass or less, and even much more preferably 0.01% by mass or less, and it is still much more preferable that the carbon dioxide absorbent is substantially free of water. Here, "substantially free of water" means that water is not intentionally added and does not exclude the presence of a small amount of water as an impurity.

When the carbon dioxide absorbent comprises the amine compound (A) and the porous material (B), a method for preparing the carbon dioxide absorbent is not limited, and any known method can be used. For example, the amine compound (A) and the porous material (B) can be blended, and mixed using a known apparatus to prepare it.

When the carbon dioxide absorbent is in an aspect in which at least some of the amine compound (A) is supported on the porous material (B), the carbon dioxide absorbent can preferably be prepared by the following method.

First, the amine compound (A) is dissolved in an organic solvent, and the porous material (B) is then added to the solution, which is stirred preferably under a temperature of 5 to 60°C for 1 to 24 hours, to prepare a mixture. The organic solvent is then removed from the mixture obtained by distillation and the like, and the remaining solids are dried under reduced pressure to obtain the carbon dioxide absorbent.

As the organic solvent, from a viewpoint of solubility of the amine compound (A) and from a viewpoint of easy removal from the carbon dioxide absorbent, preferable is dichloromethane or a monovalent alcohol having 4 or less of carbon atoms, more preferable is the monovalent alcohol having 4 or less of carbon atoms, and even more preferable is at least one selected from the group consisting of methanol, ethanol, and isopropyl alcohol.

### [Method for Capturing Carbon Dioxide]

A method for capturing carbon dioxide (hereinafter simply referred to as "the method of the present invention", too) of the present invention is characterized by comprising using the above carbon dioxide absorbent.

The method of the present invention can elevate the amount of carbon dioxide absorbed from a gas containing carbon dioxide and can be suitably used, particularly, in technology of directly capturing carbon dioxide (DAC) from the air.

Carbon dioxide can be easily desorbed from the absorbent with carbon dioxide absorbed by pressure swing, and the repeated usability of the carbon dioxide absorbent can be improved.

It is preferable that the method for capturing carbon dioxide according to the present invention comprises: an absorption step of bringing a gas containing carbon dioxide into contact with the carbon dioxide absorbent, to cause the carbon dioxide absorbent to absorb the carbon dioxide, and a desorption step of desorbing carbon dioxide from the carbon dioxide absorbent with carbon dioxide absorbed in the absorption step, and wherein the desorption step comprises a step of subjecting the carbon dioxide absorbent with carbon dioxide absorbed to a reduced pressure condition.

### <Absorption Step>

The absorption step is a step of bringing the gas containing carbon dioxide into contact with the carbon dioxide absorbent, to cause the carbon dioxide absorbent to absorb the carbon dioxide. A contact method of the carbon dioxide absorbent and the gas can be selected as suitable one depending on morphology of the carbon dioxide absorbent and is not limited. For example, by passing the gas containing carbon dioxide through the carbon dioxide absorbent, spraying the carbon dioxide absorbent in the gas containing carbon dioxide, or locating the carbon dioxide absorbent in the gas containing carbon dioxide, the gas containing carbon dioxide can be brought into contact with the carbon dioxide absorbent.

The gas containing carbon dioxide is not limited, but includes, for example, air, thermal power plant exhaust gas, steel plant exhaust gas, cement plant exhaust gas, chemical plant exhaust gas, bio-fermentation gas, and natural gas. There is a need for capturing carbon dioxide from these gases with particularly energy savings, and the present invention is particularly effective. A concentration of carbon dioxide in the gas, pressure of the gas, and a temperature of the gas are not limited, and the method of the present invention can be applied in gases with a wide range of conditions.

In addition, the gas containing carbon dioxide may also contain acidic gas and the like other than carbon dioxide. The acidic gas includes CO, NOx, and SOx in the exhaust gas, formaldehyde come up from methanol-fueled power generation, and other hydrogen chloride, hydrogen sulfide. When the above gas containing carbon dioxide contains acidic gases and the like other than carbon dioxide, it is preferable that known steps for removing other acidic gases are combined. Specifically, included is an aspect that the method for capturing carbon dioxide of the present invention is applied to the gas containing acidic gases and the like other than carbon dioxide, or an aspect that the method for capturing carbon dioxide of the present invention is applied after removing other acidic gases from the gas containing acidic gases and the like other than carbon dioxide by a known means.

In the absorption step, a temperature when the gas containing carbon dioxide is brought into contact with the carbon dioxide absorbent is not limited, but is preferably 0°C or more and less than 60°C, more preferably 20°C or more and less than 60°C, from the viewpoint of improving the amount of carbon dioxide absorbed.

In the absorption step, a pressure when the gas containing carbon dioxide is brought into contact with the carbon dioxide absorbent is preferably higher than that in the desorption step described later, and more preferably an atmospheric pressure to increased pressure condition, from the viewpoint of carrying out the pressure swing. The pressure is in a range of, for example, 0.1 to 10 MPa, and preferably 0.1 to 1 MPa.

### <Desorption Step>

A desorption step is a step of desorbing carbon dioxide from the carbon dioxide absorbent with carbon dioxide absorbed in the absorption step. The desorption step according to the present invention comprises a step of subjecting the carbon dioxide absorbent with carbon dioxide absorbed to a reduced pressure condition.

The reduced pressure condition is preferably 10 kPa or less, more preferably 5 kPa or less, and even more preferably 1 kPa or less, from the viewpoint of improving the carbon dioxide desorption performance.

In the desorption step, a temperature when the carbon dioxide absorbent is subjected to the reduced pressure condition is not limited, but from the viewpoint of improving the carbon dioxide desorption performance, it is preferably 0°C or more, and more preferably 10°C or more. In addition, from the viewpoint of inhibiting the thermal deterioration of the amine compound (A) in the carbon dioxide absorbent, it is preferably less than 50°C, and more preferably 45°C or less.

The pressure reduction in the desorption step can be performed by a known method using an apparatus equipped with a depressurizing means such as a depressurizing pump.

The carbon dioxide absorbent and the carbon dioxide which are separated in the desorption step can be captured separately and reused.

### [Carbon Dioxide Separation and Capture Apparatus]

The carbon dioxide separation and capture apparatus of the present invention (hereinafter referred to as "the apparatus of the present invention", too) comprises an absorption apparatus comprising a mechanism for bringing the gas containing carbon dioxide into contact with the carbon dioxide absorbent, to cause the carbon dioxide absorbent to absorb the carbon dioxide, and a desorption apparatus comprising a mechanism for desorbing carbon dioxide from the carbon dioxide absorbent with carbon dioxide absorbed.

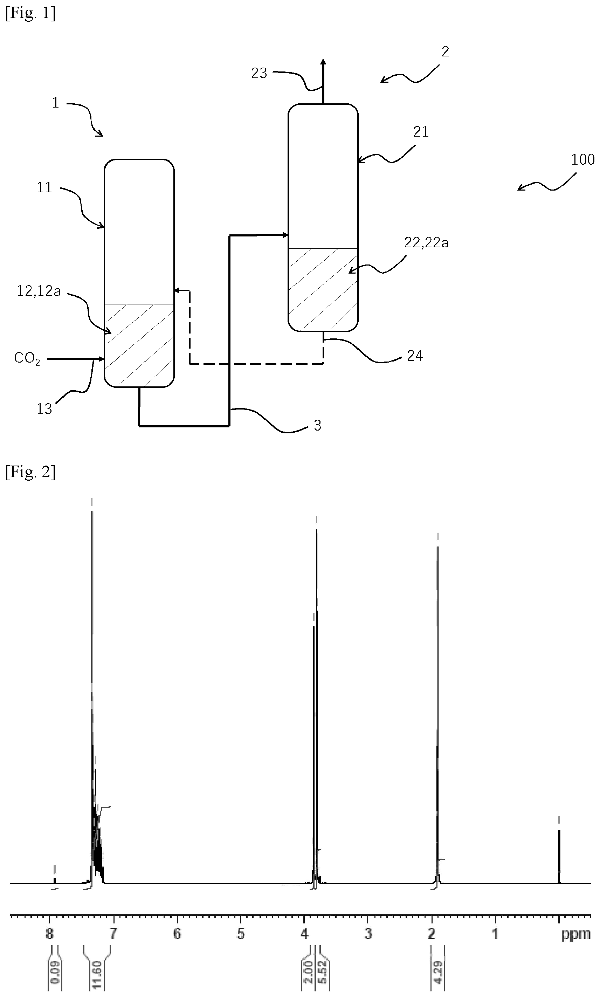

The apparatus of the present invention will be described with reference to Fig. 1. Fig. 1 is a schematic diagram showing an embodiment of a carbon dioxide separation and capture apparatus 100 of the present invention, in which 1 denotes the absorption apparatus and 2 denotes the desorption apparatus in Fig. 1.

### <Absorption Apparatus>

The absorption apparatus 1 in the carbon dioxide separation and capture apparatus 100 is equipped with the carbon dioxide absorbent and comprises a mechanism for bringing the gas containing carbon dioxide into contact with the carbon dioxide absorbent, to cause the carbon dioxide absorbent to absorb the carbon dioxide.

The absorption apparatus 1 is not limited, as long as it has configuration such that the gas containing carbon dioxide are brought into contact with the carbon dioxide absorbent, depending on the morphology of the carbon dioxide absorbent. As shown in Fig. 1, for example, the absorption apparatus 1 can be equipped with an absorbent holding part 12 that holds a carbon dioxide absorbent 12a inside a reaction column 11 and can be further equipped with a gas supplying part 13 that supplies the gas containing carbon dioxide to the absorbent holding part 12. In addition, the absorption apparatus 1 can be also equipped with an absorbent discharging part (not shown) that discharges the carbon dioxide absorbent 12a held in the absorbent holding part 12 and an absorbent supplying part (not shown) that supplies a new carbon dioxide absorbent to the absorbent holding part 12, from a viewpoint of discharging the carbon dioxide absorbent with carbon dioxide absorbed from the absorbent holding part 12 and supplying a new carbon dioxide absorbent.

The absorption apparatus 1 may further comprise a heating and cooling mechanism to adjust the temperature when the gas containing carbon dioxide is brought into contact with the carbon dioxide absorbent. It may also comprise a carbon dioxide concentration measuring mechanism so that a carbon dioxide concentration in the gas can be measured. Furthermore, the absorption apparatus 1 may comprise a pressurizing and depressurizing mechanism to adjust pressure when the gas containing carbon dioxide is brought into contact with the carbon dioxide absorbent.

The carbon dioxide separation and capture apparatus 100 may have a connecting part 3 for supplying the carbon dioxide absorbent with carbon dioxide absorbed in the absorption apparatus 1 to the desorption apparatus 2.

A means of supplying the carbon dioxide absorbent with carbon dioxide absorbed from the absorption apparatus 1 to the desorption apparatus 2 is not limited, and the absorption apparatus 1 operated for a certain period of time may be stopped once, and the carbon dioxide absorbent in the reaction column 11 equipped in the absorption apparatus 1 may be supplied to the desorption apparatus 2 together. Alternatively, from the absorbent holding part 12 of the absorption apparatus 1, the carbon dioxide absorbent may be supplied continuously or interruptedly to the desorption apparatus 2 by utilizing the connecting part 3.

### <Desorption Apparatus>

The desorption apparatus 2 in the carbon dioxide separation and capture apparatus 100 comprises a mechanism for desorbing carbon dioxide from the carbon dioxide absorbent with carbon dioxide absorbed in the absorption apparatus 1. The desorption apparatus 2 has a mechanism for desorbing carbon dioxide from the carbon dioxide absorbent with carbon dioxide absorbed in the absorption apparatus 1. In the present invention, the desorption apparatus 2 preferably comprises at least a depressurizing mechanism as the mechanism for desorbing carbon dioxide from the viewpoint of carrying out the pressure swing.

As shown in Fig. 1, for example, the desorption apparatus 2 can be equipped with an absorbent holding part 22 that holds a carbon dioxide absorbent 22a with carbon dioxide absorbed inside a reaction column 21, and further equipped with a gas discharging part 23 that discharges carbon dioxide desorbed from the carbon dioxide absorbent. The desorption apparatus 2 also comprises a depressurizing mechanism (not shown) for bringing the inside of the reaction column 21 under a reduced pressure condition.

The desorption apparatus 2 may comprise, in addition to the depressurizing mechanism, a heating and cooling mechanism, a carbon dioxide concentration measuring mechanism, and the like, as in the absorption apparatus 1.

The carbon dioxide absorbent after carbon dioxide is desorbed in the desorption apparatus 2 can also be reused by supplying it back into the absorption apparatus 1 again from an absorbent discharging part 24 for supplying the carbon dioxide absorbent after carbon dioxide is desorbed to the absorption apparatus 1.

The carbon dioxide separation and capture apparatus 100 may further comprise a capturing apparatus for capturing carbon dioxide desorbed. Still, here, the carbon dioxide captured may be used for agricultural applications such as Enhanced Oil Recovery and a plant factory; industrial gas applications such as beverages and welding; chemical synthesis applications; and carbon dioxide capture and storage (CCS) applications. Prior to use in these applications, the carbon dioxide captured may also be concentrated.

### Examples

Hereinafter, the present invention will be described with reference to examples, but the present invention is not limited to the scope of the examples. In the present examples, various measurements and evaluations were performed by the following methods.

### (¹H-NMR Analysis)

The amine compounds obtained in Production Examples 1, 2, and 4 were structurally identified by ¹H-NMR analysis. Measurement conditions are as follows.
Nuclear magnetic resonance spectrometer; AVANCE III-500 produced by Bruker Biospin Group.
Probe; 5 mmϕ double resonance multinuclear probe (BBFO Plus Smart probe)
Deuterated solvent; Deuterated chloroform
Measurement nucleus; 1H
Measurement temperature; room temperature

### (Specific Surface Area and Pore Volume of Porous Material)

The specific surface area and the pore volume of the porous material were measured by the specific surface area/pore size distribution measurement analyzer ("ASAP2020" produced by Shimadzu Corporation).

### (Volume Median Particle Size (D₅₀) of Porous Material)

Using a laser diffraction/scattering particle size distribution analyzer ("LMS-200e" produced by Malvern Panalytical Ltd.,), particle distribution of the porous material was measured.

Then, the particle diameter corresponding to 50% of a cumulative volume frequency calculated from the smaller particle diameter of the particle distribution was taken as the volume median particle size (D₅₀) of the porous material.

### (Carbon Dioxide Absorption-Desorption Cycle Test under Pressure Swing Condition)

A carbon dioxide concentration meter and a petri dish were placed inside a desiccator (internal dimension: 370 mm × 260 mm × 272 mm, capacity: about 26 L) under a constant temperature and humidity environment with a temperature of 30°C and 50% RH. The carbon dioxide absorbent obtained in each example was weighed into an amount of 10 mmol in terms of the number of amino groups in the amine compound contained in the carbon dioxide absorbent, and added to the petri dish in the desiccator, a door was immediately closed, and the carbon dioxide absorbent was left to stand in the desiccator (carbon dioxide absorption step). Change in carbon dioxide concentration in the desiccator was monitored for 23 hours with the carbon dioxide concentration meter.

After a lapse of 23 hours, the carbon dioxide absorbent with carbon dioxide absorbed was removed from the desiccator, and the pressure was reduced for 1 hour in a vacuum dryer (oil-sealed rotary pump, specification of the degree of pressure reduction: 6.7 × 10⁻² Pa) set to an internal temperature of 30°C (carbon dioxide desorption step). This carbon dioxide absorption-desorption cycle was carried out three times.

### (1) Lowest Carbon Dioxide Concentration in Carbon Dioxide Absorption Step of Third Cycle

Table 1 shows the lowest carbon dioxide concentration (ppm) in the desiccator in the carbon dioxide absorption step of the third cycle. A smaller value of this concentration means a high carbon dioxide absorption property of the carbon dioxide absorbent even after the carbon dioxide absorption-desorption cycle is repeated by the pressure swing method.

### (2) Difference in Carbon Dioxide Concentration in Carbon Dioxide Absorption Step of Third Cycle

The difference (ppm) between the lowest carbon dioxide concentration and the highest carbon dioxide concentration in the desiccator in the carbon dioxide absorption step of the third cycle was calculated and is shown in Table 1. A larger value of this difference means a high carbon dioxide absorption property of the carbon dioxide absorbent even after the carbon dioxide absorption-desorption cycle is repeated by the pressure swing method.

### (3) Difference in Lowest Carbon Dioxide Concentration between Second and Third Cycles

The difference (ppm) between the lowest carbon dioxide concentration in the desiccator in the carbon dioxide absorption step of the second cycle and the lowest carbon dioxide concentration in the desiccator in the carbon dioxide absorption step of the third cycle was calculated and is shown in Table 1. A smaller absolute value of this difference means a stable carbon dioxide absorption property of the carbon dioxide absorbent with little or no variation in the carbon dioxide absorption property even after the carbon dioxide absorption-desorption cycle is repeated by the pressure swing method.

In Examples and Comparative Examples, as the amine compounds and the porous materials, the following were used.

### (Amine Compound)

MXDA: metaxylylenediamine, produced by Mitsubishi Gas Chemical Co., Inc.
MXDA-BAL1: amine compound represented by the formula (1-2), produced by the method described in Production Example 1 described later.
G-240: amine compound represented by the formula (1-3), styrene (1 mol) adduct of metaxylylenediamine, "Gaskamine240" produced by Mitsubishi Gas Chemical Co., Inc.
BAC-BAL1: amine compound represented by the formula (1-4), produced by the method described in Production Example 2 described later.
BAC-S: amine compound represented by the formula (1-5), styrene (1 mol) adduct of 1,3-bis(aminomethyl)cyclohexane, produced by the method described in Production Example 3 described later.
BAC-EH1: amine compound represented by the formula (1-6), produced by the method described in Production Example 4 described later.
PEI600: polyethyleneimine (average molecular weight: 600) having a structure represented by the formula (1-7), produced by FUJIFILM Wako Pure Chemical Corp.

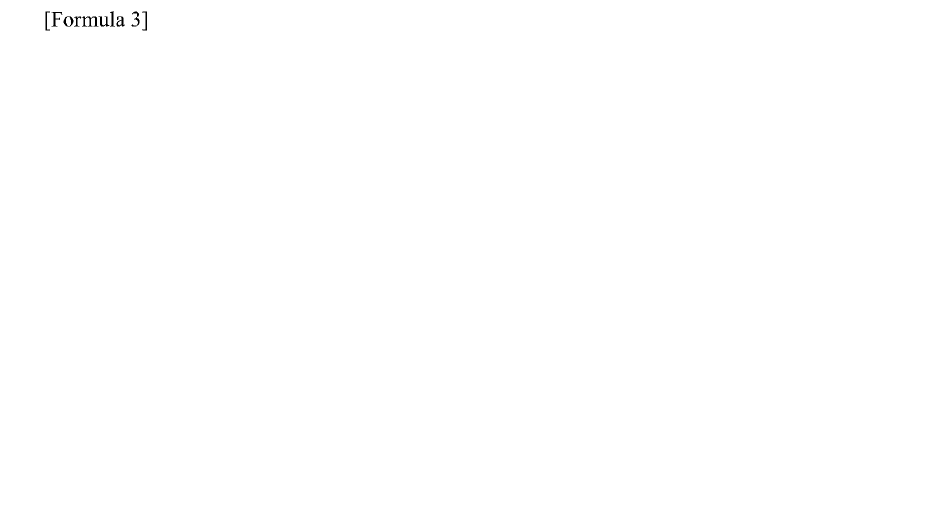

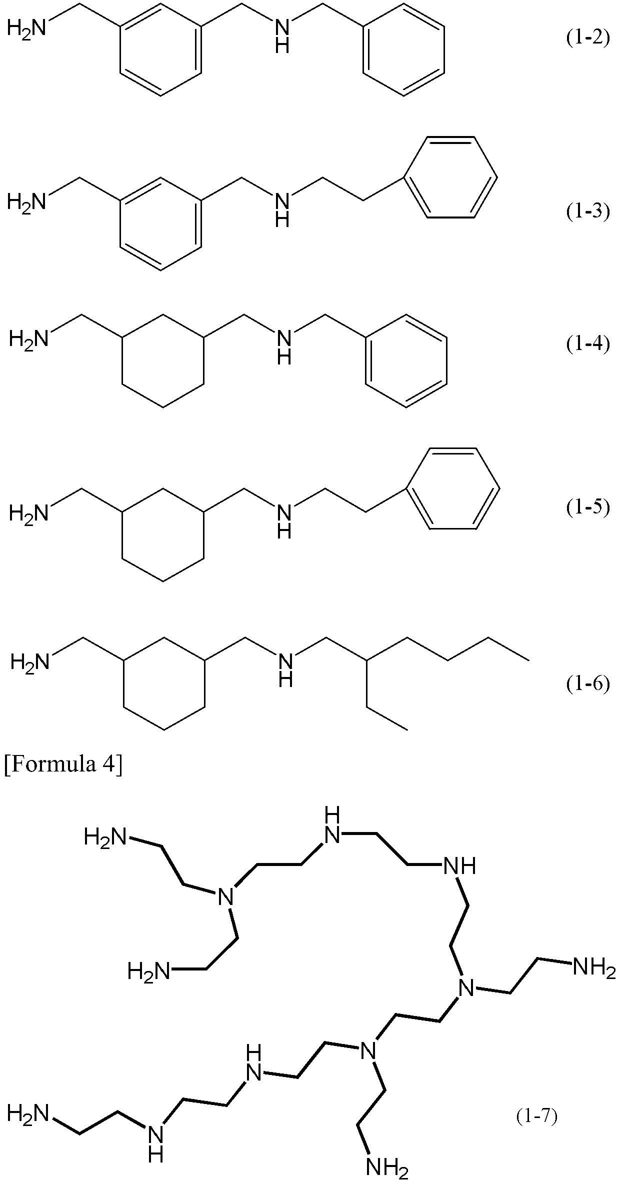

### (Porous Material)

### Mesoporous silica: "SBA15" produced by Merck KGaA

The volume median particle size (D₅₀): 100 µm, the specific surface area by the BET method: 800 m²/g, the pore volume: 0.8 cm³/g

### Production Example 1 (Production of Amine Compound Represented by Formula (1-2))

A reaction container was charged with 136 g (1 mol) of metaxylylenediamine (MXDA, produced by Mitsubishi Gas Chemical Co., Inc.), and 106 g (1 mol) of benzaldehyde (produced by Tokyo Chemical Industry Co., Ltd.) was added dropwise thereto over 15 minutes with stirring at room temperature under a nitrogen stream. After the completion of the dropwise addition, the mixture was heated to 80°C and reacted by stirring for 1.5 hours after reaching 80°C. The obtained reaction liquid was dissolved in toluene and then concentrated to obtain imine.

To the obtained imine, toluene was added such that the imine concentration was 50% by mass. A 5% carbon-supported palladium (Pd/C) catalyst (produced by Tokyo Chemical Industry Co., Ltd.) was added thereto at 3.5% by mass with respect to the imine, and hydrogen reduction reaction was carried out under conditions involving a hydrogen pressure of 5 MPa and a heating temperature of 100°C. The reaction was terminated when the hydrogen inflow became 0. The catalyst was filtered off, and toluene was then distilled off to obtain an amine compound represented by the formula (1-2).

Fig. 2 shows a ¹H-NMR chart of the amine compound obtained in Production Example 1.
¹H-NMR chemical shift: δ7.1-7.9 ppm (m, 9H, -C₆H₄- and -C₆H₅), δ3.8-3.85 ppm (s, 6H, -CH₂-C₆H₄-CH₂- and -CH₂-C₆H₅), δ1.9 ppm(s, -NH- and -NH₂-, 3H)

### Production Example 2 (Production of Amine Compound Represented by Formula (1-4))

An amine compound represented by the formula (1-4) was obtained through the same reaction as in Production Example 1 except that 142 g (1 mol) of 1,3-bis(aminomethyl)cyclohexane (1,3-BAC, produced by Mitsubishi Gas Chemical Co., Inc.) was used instead of MXDA in Production Example 1.

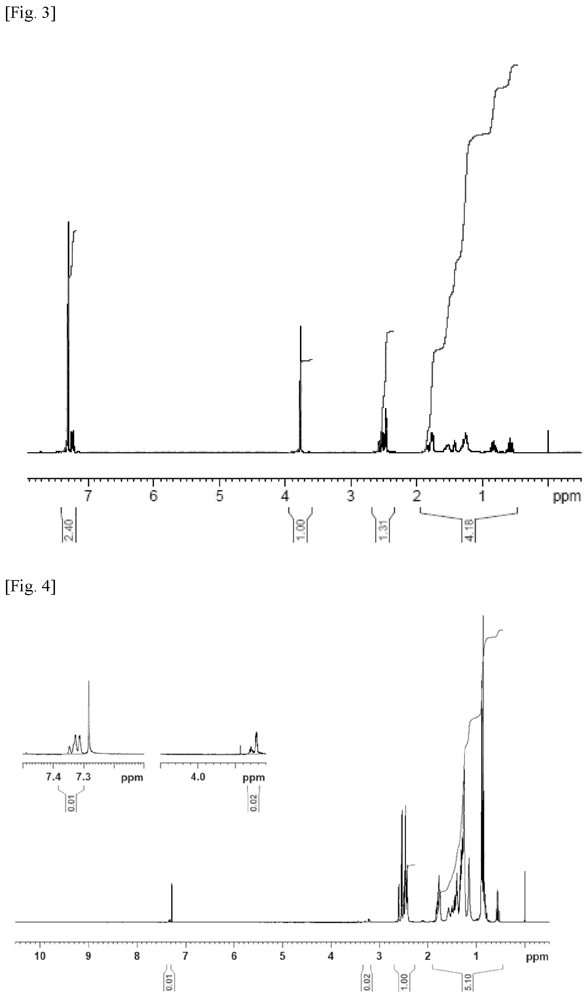

Fig. 3 shows a ¹H-NMR chart of the amine compound obtained in Production Example 2.
¹H-NMR chemical shift: δ7.2-7.3 ppm (m, 5H, -C₆H₅), δ3.8 ppm (s, 2H, -CH₂-C₆H₅), δ2.4-2.6 ppm (m, 4H, -CH₂-C₆H₁₀-CH₂-), δ0.5-1.9 ppm (m, 10H, -C₆H₁₀-)

### Production Example 3 (Production of Amine Compound Represented by Formula (1-5))

The compound was produced in accordance with the method described in Example 3 of JP 2002-161076 A. A reaction container was charged with 142 g (1 mol) of 1,3-bis(aminomethyl)cyclohexane (1,3-BAC, produced by Mitsubishi Gas Chemical Co., Inc.) and 2.8 g (2% by mass with respect to the 1,3-BAC) of a lithium amide catalyst (produced by FUJIFILM Wako Pure Chemical Corp.), and stirred at a temperature of 100°C for 2 hours under a nitrogen stream. To this reaction container, 104 g (1 mol) of styrene (produced by Tokyo Chemical Industry Co., Ltd.) was added dropwise over 30 minutes, and after the completion of the dropwise addition, reaction was further performed by stirring at a temperature of 100°C for 2 hours. After the completion of the reaction, 10 g of water was added thereto, and the catalyst was filtered off, followed by distillation under reduced pressure to obtain a styrene (1 mol) adduct of 1,3-bis(aminomethyl)cyclohexane serving as an amine compound represented by the formula (1-5).

### Production Example 4 (Production of Amine Compound Represented by Formula (1-6))

An amine compound represented by the formula (1-6) was obtained through the same reaction as in Production Example 2 except that 36 g (1 mol) of 2-ethylhexanal (produced by Tokyo Chemical Industry Co., Ltd.) was used instead of benzaldehyde in Production Example 2.

Fig. 4 shows a ¹H-NMR chart of the amine compound obtained in Production Example 4.
¹H-NMR chemical shift: δ2.4-2.6 ppm (m, 6H, -CH₂-N-), δ1.6 ppm (m, 1H, CH₃-CH₂-CH- in an ethylhexyl group), δ1.2 ppm (m, 3H, -NH- and -NH₂-), δ0.8-1.8 ppm (m, 22H, - CH₂- in a cyclohexane ring, CH₃-(CH₂)₃- and CH₃-CH₂-CH- in an ethylhexyl group), δ0.5 to 0.6 ppm (m, 2H, -CH- in a cyclohexane ring)

### Examples 1 to 5, Comparative Examples 1 to 2 (Preparation and Evaluation of Carbon Dioxide Absorbent)

### (Preparation of Carbon Dioxide Absorbent)

A glass container purged with nitrogen was charged with 4 g of the amine compound described in Table 1, and 25 g of methanol, and stirred with a stirrer at room temperature (23°C) to dissolve the amine compound. Then, 4 g of the porous material was added thereto, and the container was purged with nitrogen again and stirred for 3 hours for homogenization. From the obtained mixture, methanol was distilled off and then dried in a vacuum dryer of 80°C for 3 hours to obtain a carbon dioxide absorbent having the amine compound supported on the porous material (the amount of the amine compound with respect to 100 parts by mass of the porous material: 100 parts by mass).

### (Evaluation of Carbon Dioxide Absorbent)

The carbon dioxide absorption-desorption cycle test was conducted under a pressure swing condition by the method described above using the obtained carbon dioxide absorbents. The results are shown in Table 1.

### [Table 1]

**Table 1**

| | | | Comparative Example | Example | | | | | Comparative Example |
|---|---|---|---|---|---|---|---|---|---|
| | | | 1 | 1 | 2 | 3 | 4 | 5 | 2 |
| CO₂ Absorbent | Amine Compound | Abbreviation | MXDA | MXDA-BAL1 | G-240 | BAC-BAL1 | BAC-S | BAC-EH1 | PEI600 |
| | | Structural Formula | - | (1-2) | (1-3) | (1-4) | (1-5) | (1-6) | (1-7) |
| | Porous Material | | Mesoporous Silica | | | | | | |
| Evaluation Results | CO₂ Absorption Capacity of Third Cycle | (1) Lowest CO₂ Concentration ppm) | 382 | 341 | 329 | 340 | 359 | 354 | 381 |
| | | (2) Difference in CO₂ Concentration (ppm) | 49 | 96 | 120 | 82 | 176 | 157 | 154 |
| | Difference in Lowest CO₂ Concentration between Second and Third Cycles | (3) Difference in Lowest CO₂ Concentration (ppm) | 67 | -34 | 4 | -23 | 29 | 25 | 95 |

As seen from Table 1, it is evident that the carbon dioxide absorbents of the present Examples exhibit a good carbon dioxide absorption property and a stable carbon dioxide absorption property even after repeated carbon dioxide absorption-desorption cycles by the pressure swing method.

### Industrial Applicability

The present invention can provide a carbon dioxide absorbent that is excellent in carbon dioxide absorption property and is excellent in repeated usability with little or no reduction in carbon dioxide absorption property even if the carbon dioxide absorbent is regenerated by desorbing carbon dioxide by pressure swing after absorption of carbon dioxide.

### Reference Signs List

- 100: carbon dioxide separation and capture apparatus
- 1: absorption apparatus
- 2: desorption apparatus
- 3: connecting part
- 11, 21: reaction column
- 12, 22: absorbent holding part
- 12a: carbon dioxide absorbent
- 13: gas supplying part
- 21: reaction column
- 22a: carbon dioxide absorbent with carbon dioxide absorbed
- 23: gas discharging part
- 24: absorbent discharging part

## Claims

1. A carbon dioxide absorbent comprising an amine compound (A) represented by the following general formula (1):
H₂N-(CH₂)ₘ-X-(CH₂)ₙ-NHR¹ (1)
wherein X is a phenylene group or a cyclohexylene group, R¹ is a hydrocarbon group having 2 to 12 carbon atoms and optionally having a hydroxy group, and m and n are each independently a number of 1 to 6.

2. The carbon dioxide absorbent according to claim 1, wherein the amine compound (A) is a compound that is liquid at 25°C.

3. The carbon dioxide absorbent according to claim 1 or 2, wherein X in the general formula (1) is a 1,3-phenylene group or a 1,3-cyclohexylene group.

4. The carbon dioxide absorbent according to any one of claims 1 to 3, wherein the amine compound (A) is an amine compound represented by any of the following formulas (1-1) to (1-6):

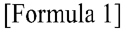

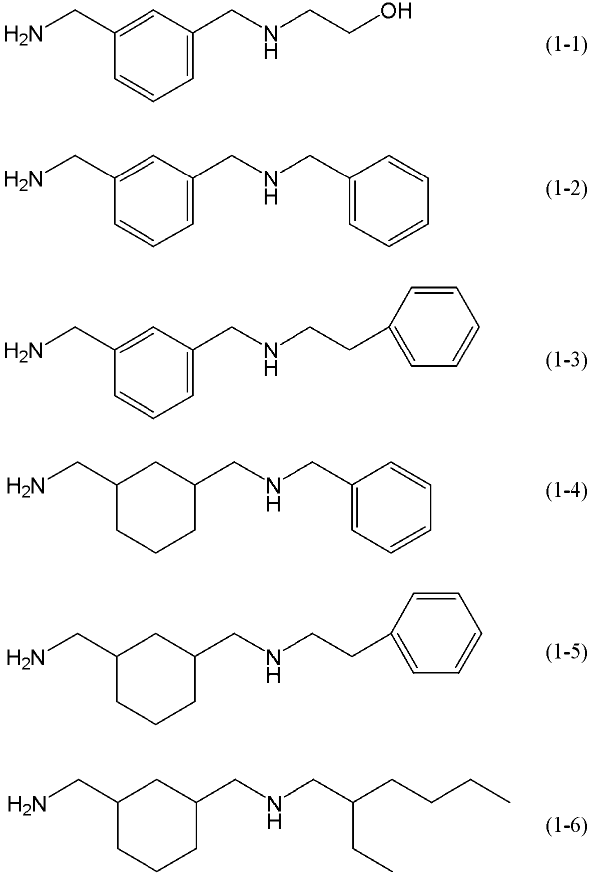

5. The carbon dioxide absorbent according to any one of claims 1 to 4, wherein the carbon dioxide absorbent further comprises a porous material (B).

6. The carbon dioxide absorbent according to claim 5, wherein the porous material (B) comprises at least one selected from the group consisting of silica and alumina.

7. A method for capturing carbon dioxide, comprising using the carbon dioxide absorbent according to any one of claims 1 to 6.

8. The method according to claim 7, wherein the method comprises: an absorption step of bringing a gas containing carbon dioxide into contact with the carbon dioxide absorbent, to cause the carbon dioxide absorbent to absorb the carbon dioxide, and a desorption step of desorbing carbon dioxide from the carbon dioxide absorbent with carbon dioxide absorbed in the absorption step, and wherein the desorption step comprises a step of subjecting the carbon dioxide absorbent with carbon dioxide absorbed to a reduced pressure condition.

9. A carbon dioxide separation and capture apparatus comprising: an absorption apparatus comprising a mechanism for bringing a gas containing carbon dioxide into contact with the carbon dioxide absorbent according to any one of claims 1 to 6, to cause the carbon dioxide absorbent to absorb the carbon dioxide; and a desorption apparatus comprising a mechanism for desorbing carbon dioxide from the carbon dioxide absorbent with carbon dioxide absorbed.
